(19)

Europäisches
Patentamt
European
Patent Office
Office européen
des brevets

(11)  **EP 1 283 495 B1**

(12)  **EUROPEAN PATENT SPECIFICATION**

(45) Date of publication and mention
of the grant of the patent:
**27.07.2011   Bulletin 2011/30**

(51) Int Cl.:
***G06F 3/033*** *(2006.01)*

(21) Application number: **02017520.4**

(22) Date of filing: **06.08.2002**

(54) **Six degrees of freedom information indicator**

Sechsfacher Freiheitsgrad zur Anzeige von Informationen

Indicateur de six degrés de l'information de liberté

(84) Designated Contracting States:
**DE ES FR GB IT NL**

(30) Priority: **10.08.2001   JP 2001244134**
**19.07.2002   JP 2002211484**

(43) Date of publication of application:
**12.02.2003   Bulletin 2003/07**

(73) Proprietor: **Wacom Co., Ltd**
**Kitasaitama-Gun,**
**349-1148 Saitama-Ken (JP)**

(72) Inventors:
• **Fukushima, Yasayuki**
**Goka-Machi, Sashima-gun, Ibaraki-Ken (JP)**

• **Niwa, Masaki**
**Kashiwa-si, Chiba-ken (JP)**

(74) Representative: **Paul, Dieter-Alfred et al**
**Paul & Albrecht**
**Patentanwaltssozietät**
**Hellersbergstrasse 18**
**41460 Neuss (DE)**

(56) References cited:
**EP-A- 0 694 865      EP-A- 0 964 355**
**WO-A-92/06457      GB-A- 1 528 668**
**GB-A- 2 247 066      US-A- 5 594 215**
**US-A- 5 793 356      US-A- 6 115 028**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to an information indicator for entering six degrees of freedom information into a computer according to the preamble of claim 1. More particularly, the invention relates to a six degrees of freedom information indicator, used in combination with a position detector using electromagnetic induction, which enables an operator to easily perform one-handed input by finger-operating a plurality of input means provided so as to achieve movement of an input operating section corresponding to a desired movement of an object, from among six degrees of freedom information (X, Y, Pitch, Roll and Yaw) necessary for controlling movement and rotation of an object in a 3D (three-dimensional) space, four degrees of freedom information (the above-mentioned six degrees of freedom except for X and Y) not entered by ordinary GUI (graphical user interface) navigation.

A known input device called the SpaceBall (trademark) permits simultaneous input of six degrees of freedom information of an object in a 3D space. For example, one model of this input device, the SpaceBall 4000 FLX, has a fixed ball type sensor which senses the magnitude of a force when an operator touches the ball type sensor, and it is possible to enter information for controlling a 3D object into a computer.

Because the SpaceBall is a single input means having an input means composed of a pressure-sensitive sensor, problems occur regarding the independent controllability of six pieces of information, i.e., information of a plurality of degrees of freedom not desired by the operator may be entered accidentally.

Another problem is that, since information is not entered by moving or rotating the input section, it is impossible to enter absolute coordinates or an absolute angle, i.e., the problem of operational intuition.

The SpaceBall does not have a GUI navigation function like a mouse based on the movement of an enclosure, and is therefore an input device specifically for 3D applications.

As another input device, on the other hand, a known position detector and position indicator using electromagnetic induction have been proposed by the present applicant. The proposed apparatus has a position detector usually called a tablet having many loop coils provided in parallel in the position detecting direction and a position indicator having a resonance circuit, as disclosed, for example, in Japanese Unexamined Patent Application Publication No. 63-70326. The basic operation will be briefly described. An AC signal of a prescribed frequency is applied to a loop coil to cause it to transmit radio waves (including an AC electric field, an AC magnetic field, or an AC electromagnetic field), and a resonance circuit provided in a position indicator receives the transmitted radio waves. After receiving the radio waves, which generate an induction voltage, the resonance circuit transmits radio waves to the above-mentioned loop coil. This operation is repeated by sequentially switching on the plurality of loop coils of the position detector, and coordinate values of the position indicated by the position indicator are detected on the basis of the level of an induced voltage generated in each of the loop coils.

According to this conventional art, the coordinate values of the position indicated by the position indicator can be determined by exchanging radio waves between the position detector and the position indicator, and hence, absolute coordinate values (XY coordinate values on the tablet surface of the position detector) by using the position indicator. A problem is, however, encountered in that information about six or more degrees of freedom necessary for controlling the movement and rotation of an object in a 3D space cannot be entered.

An improved position detector and position indicator permitting detection of the rotation angle of the position indicator have previously been proposed by the present applicant (Japanese Unexamined Patent Application Publication No. 8-30374). More specifically, this improvement comprises providing, in a position indicator having a resonance circuit comprising a first coil for detecting coordinates and a condenser, a control coil in parallel with the first coil so as to surround a part of a magnetic flux generated in the first coil by an induction current flowing through the first coil, controlling the open/closed state of the control coil, and causing a change in the distribution of magnetic fluxes passing through the first coil so as to permit detection of the rotation angle. Even with this input device, it is possible to simultaneously enter only information of three degrees of freedom (X and Y coordinate values and the rotation angle around the Z-axis).

As describe above, the conventional input device permitting simultaneous input of six-degree of freedom information has problems regarding independent controllability of the six degrees of freedom information and operational intuition. The conventional position indicator using electromagnetic induction in the position detector has a problem in that it is impossible to simultaneously enter six degrees of freedom information.

An information indicator of the above mentioned kind is known from WO92/06457, which is considered to represent the most relevant state of the art. The previous information indicator is suitable for indicating six degrees of freedom in combination with the position detector using electromagnetic induction, which enables an operator to enter six degrees of freedom information into a computer by operating the indicator when holding it one-handed. The information indicator comprises an enclosure having a bottom surface, bottom surface input means comprising a coordinate detecting coil provided on the bottom surface of the enclosure and serving to input X and Y direction information by moving the enclosure within a plane parallel set of bottom surface. Moreover the indicator includes a plurality of additional operational input means in the form of push buttons and a thumb wheel in order to enter further degrees of freedom information.

Moreover, EP-A-0 694 865 discloses a penshaped position detector, which is provided with means for detecting the pivoting angle of the pen and also a rotational movement of the pen. However, although the previous position detector includes a first coil, which is wound around only one magnetic body core, and a second coil, which is wound around both magnetic body cores, there is no relative movement between the coils even when the pen is rotated.

It is an object of the present invention to provide an information indicator of the above kind facilitating input of information of six degrees of freedom on a position detector to the movement and rotation of an object an a 3D space while maintaining operational independence and operational intuition.

This object is solved by the characterizing features 1 and 9.

In a preferred embodiment of the invention, the transmitting means comprises receiving means which receives an AC electric field, an AC magnetic field or an AC electromagnetic field of a certain frequency irradiated from the position detector side; returning means which returns an AC electric field, an AC magnetic field or an AC electromagnetic field of an arbitrary frequency to the position detector side; converting means which converts one or more pieces of degree of freedom information, corresponding to operation of at least one operational input means from among the plurality of operational input means, into time lengths, respectively; counting means which performs binarization by counting the number of waves of the AC electric field, the AC magnetic field or the AC electromagnetic field of the certain frequency thus received during one or more times converted by the converting means; and control means which controls the receiving means in response to binary code representing a plurality of pieces of degree of freedom information determined by the counting means, and causes a change in the AC electric field, the AC magnetic field or the AC electromagnetic field to be returned to the position detector side.

In the above-mentioned six degrees of freedom information indicator, the receiving means and the returning means may be a resonance circuit comprising the coordinate detecting coil.

At least one of the plurality of operational input means may have a time constant circuit, and may acquire the amount of continuous operation of the operator as continuous analog information. At least one of the plurality of operational input means may have a switch detecting circuit, and may acquire the discrete amount of operation of the operator as discrete digital information.

The operational input means may have an inertial wheel, and the movement information in the Z-axis direction may be entered through inertial rotation of the inertial wheel.

The operational input means may be a stick controller or a sliding switch which self-returns to an initial positional value upon operator's releasing the operational input means.

The operational input means may be absolute information input means which maintains the information upon completion of operation when the operator releases the operational input means.

Fig. 1 is an exterior view of the six degrees of freedom information indicator of a first embodiment of the present invention;

Fig. 2 is a circuit diagram of important portions of the position detector used in combination with the six degrees of freedom information indicator of the first embodiment of the invention;

Fig. 3 is a perspective view illustrating details of a first operational input means in the six degrees of freedom information indicator of the first embodiment of the invention;

Fig. 4 is a perspective view illustrating details of a second operational input means in the six degrees of freedom information indicator of the first embodiment of the invention;

Fig. 5 is a circuit diagram of important portions of a transmitting circuit;

Fig. 6 is a circuit diagram illustrating a typical converting means (time constant circuit) in Fig. 5;

Fig. 7 is a perspective view illustrating details of third operational input means and bottom surface input means in the six degrees of freedom information indicator of the first embodiment of the invention;

Fig. 8 is a circuit diagram of important portions of a control circuit shown in Fig. 7;

Fig. 9 is a flowchart of a control program for detecting the XY coordinates and the rotation angle around the Z-axis;

Fig. 10 is a plan view illustrating an exterior view of the six degrees of freedom information indicator of a second embodiment of the invention;

Fig. 11 is a plan view illustrating an exterior view of the six degrees of freedom information indicator of a third embodiment of the invention;

Fig. 12 is a plan view illustrating an exterior view of the six degrees of freedom information indicator of a fourth embodiment of the invention; and

Fig. 13 is a plan view illustrating an exterior view of the six-degree of freedom information indicator of a fifth embodiment of the invention.

Embodiments of the present invention will now be described with reference to the drawings. The embodiments and examples illustrated hereafter are only examples for assisting understanding of the invention, and it is not intended that the present invention be limited to these embodiments and examples.

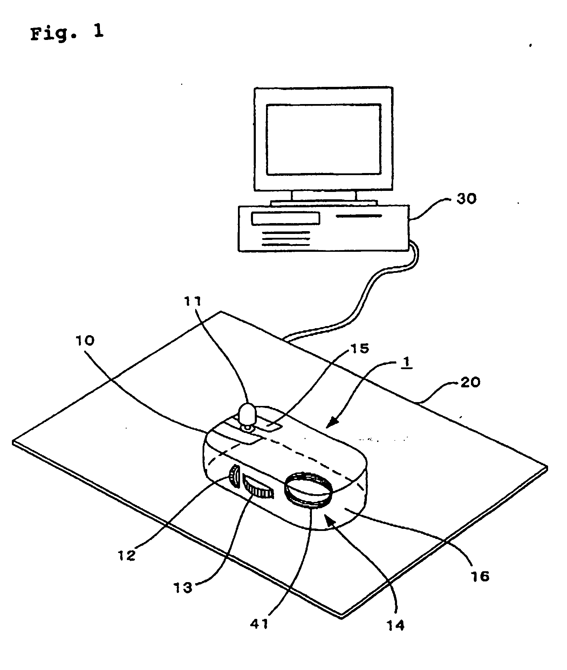

Fig. 1 illustrates an exterior view of the six degrees of freedom information indicator of a first embodiment of the present invention, together with a position detector. The six degrees of freedom information indicator 1 has a puck-shaped enclosure 10, first operational input means 11 provided at the front of the upper surface of the enclosure 10, second operational input means 12 and third operational input means 13 provided on a side of the enclosure 10, and bottom surface input means 14, including a coordinate detecting coil 41, provided on the bottom surface 16 of the enclosure 10. The six degrees of freedom information indicator 1 is used in combination with a position detector 20 using electromagnetic induction, and serves as an input unit for a computer 30. In Fig. 1, reference numeral 15 represents two operating switches such as those provided on an ordinary mouse, which cause the operation of various functions in GUI navigation or when using an application.

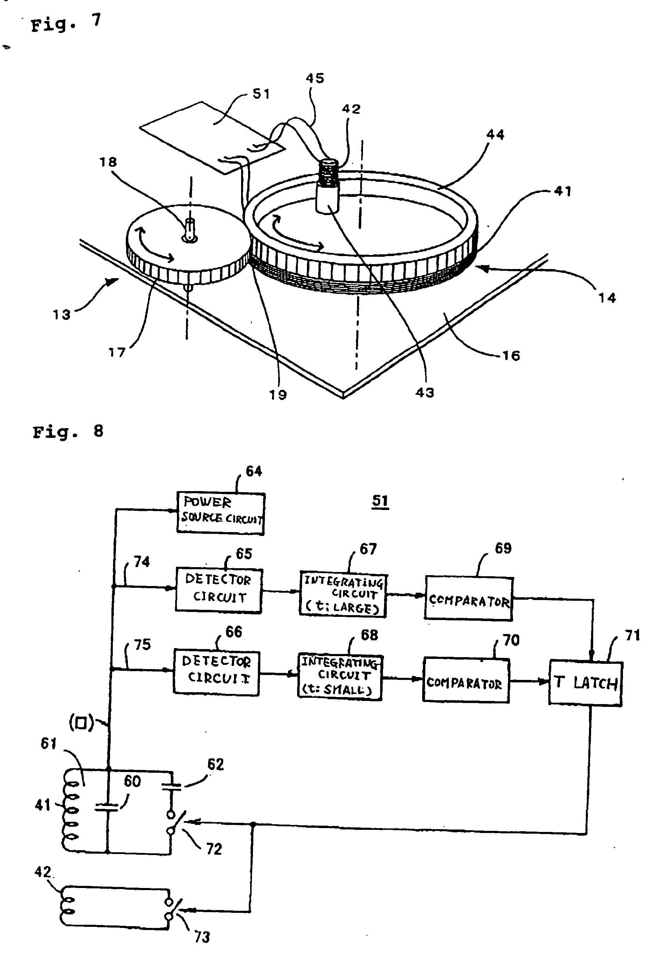

The position detector 20, also known as a tablet or a digitizer, has a flat enclosure, as shown in Fig. 1, and a prescribed area thereof functions as a position detecting area. The basic operation of the position detector 20 is to detect, using electromagnetic induction (electromagnetic coupling), position at which the six degrees of freedom information indicator 1 is placed on the position detecting area, and to enter the XY coordinates thereof into a computer. In the six degrees of freedom information indicator 1, for this purpose, a capacitor is connected to the coordinate detecting coil 41 (see Fig. 7 described later), thereby forming a resonance circuit.

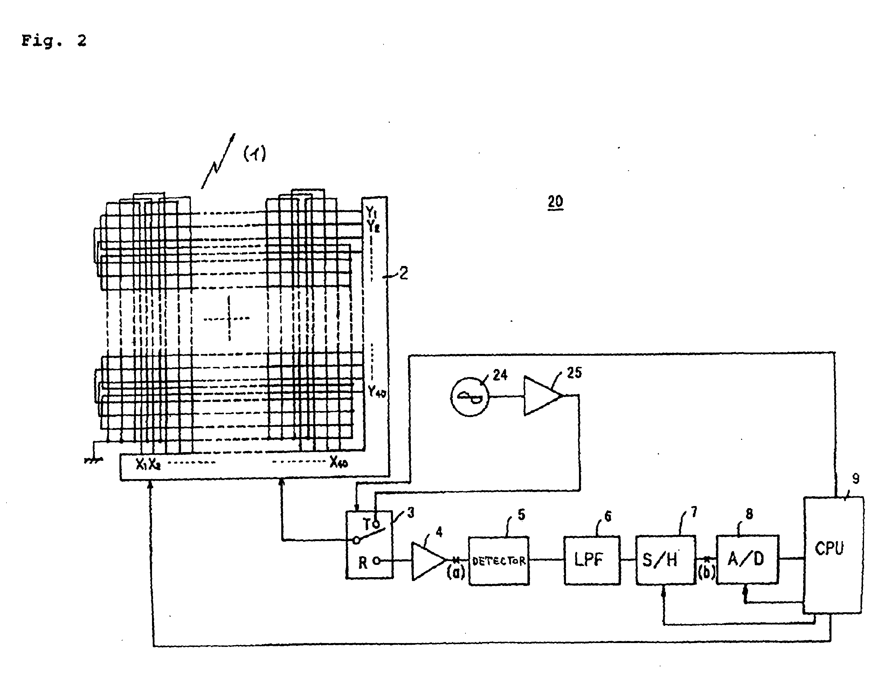

Fig. 2 illustrates the circuit configuration of important portions of the position detector 20 (this may be a tablet 20). In Fig. 2, 40 loop coils $X_1$ to $X_{40}$ are arranged in the X-direction, and 40 loop coils $Y_1$ to $Y_{40}$ are arranged in the Y-direction in parallel with each other in the detecting direction as shown in Fig. 2. These loop coils are connected to a selection circuit 2 which selects any one of the individual loop coils. This selection circuit 2 is connected to a transmission/receiving switching circuit 3, to the receiving side of which an amplifier 4 is connected. The amplifier 4 is connected to a detecting circuit 5. The detecting circuit 5 is connected to a low-pass filter 6. The low-pass filter 6 is connected to a sample-and-hold circuit 7. The sample-and-hold circuit 7 is connected to an A/D circuit (analog/digital converting circuit) 8. The A/D circuit 8 is connected to a CPU (central processing unit) 9. A control signal is entered from the CPU 9 into the selection circuit 2, the sample-and-hold circuit 7, the A/D circuit 8, and the transmission/receiving switching circuit 3. In Fig. 2, reference numeral 24 represents a generator generating a sine wave AC signal with a frequency equal to the resonance frequency of the resonance circuit of the six degrees of freedom information indicator 1, and reference numeral 25 represents a current driver which converts the AC signal into a current.

Referring again to Fig. 1, the six degrees of freedom information indicator 1 and the position detector 20 are not connected by cables, but transmission (communication) of a signal is performed using electromagnetic induction (electromagnetic coupling) between the coordinate detecting coil 41 provided on the bottom surface portion 16 of the enclosure 10 of the six degrees of freedom information indicator 1 and the loop coils built into the tablet surface of the position detector 20. That is, the six degrees of freedom information indicator 1 provides a wireless input environment in combination with the position detector 20.

The position detector 20 and the computer 30 are connected by an appropriate interface cable. An RS-232C interface or a USB interface may be used as an interface.

The six degrees of freedom information indicator 1 includes the coordinate detecting coil 41 as the bottom surface input means 14. The coordinate detecting coil 41 serves as receiving means for sending a degree-of-freedom information signal to the position detector 20 in response to the operation of the first operational input means 11 and the second operational input means 12, as described later, and returning means, and also serves as a part of the resonance circuit for detecting the XY coordinates and a rotation angle around the Z-axis. In Fig. 1, the coordinate detecting coil 41, being located on the bottom surface 16 in the interior of the enclosure 10, is not visible from the outside, but the enclosure 10 is drawn as though it were transparent.

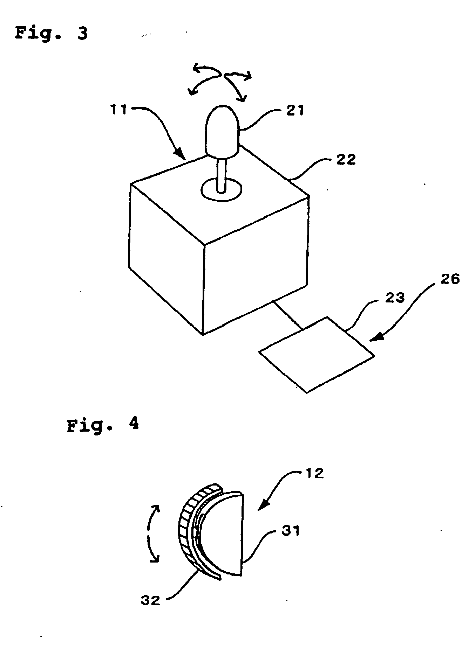

Fig. 3 illustrates the first operational input means 11 in detail. An operating member 21 is attached to a lever of a stick controller 22 forming the first operational input means 11, and is a portion which the operator touches with his or her fingers. In the exterior view shown in Fig. 1, only this operating member 21 can be seen. The stick controller 22 is of the self median returning resistance variable type, and for example, an RKJXK1224VR type manufactured by Alps Electric Co., Ltd. is used. The operating member 21 can be tilted by an angle of about 30° in all directions relative to the stick controller 22. After operation, it automatically returns to the initial position thereof. The stick controller 22 has two rotary variable resistance elements disposed at right angles to each other, and a resistance value of these two variable resistance elements depends on the inclination direction and the inclination angle of the operating member 21. Each of the variable resistance elements of the stick controller 22 is connected to a transmitting circuit 26, described later, with a time constant circuit 23 used as converting means.

Fig. 4 illustrates the second operational input means 12 in detail. The second operational input means 12 is a lever-operated sliding switch 31. By causing a lever 32 to slide, two position signals are generated and output for a side, depending upon the angle of the lever 32. As such a sliding switch, for example, an SLLB-A-B made by Alps Electric Co., Ltd. may be used. In the exterior view shown in Fig. 1, only the lever 32 can be seen. The sliding switch 31 outputs four different switch signals varying with the sliding direction and the sliding angle of the lever 32. This switch signal output is input to the transmission circuit 26.

The six degrees of freedom information indicator 1 has the transmitting circuit 26 for transmitting output signals generated by each of the first operational input means 11 and the second operational input means 12, as degree-of-freedom information, by use of electromagnetic induction, from the six degrees of freedom information indicator 10 to the position detector 20.

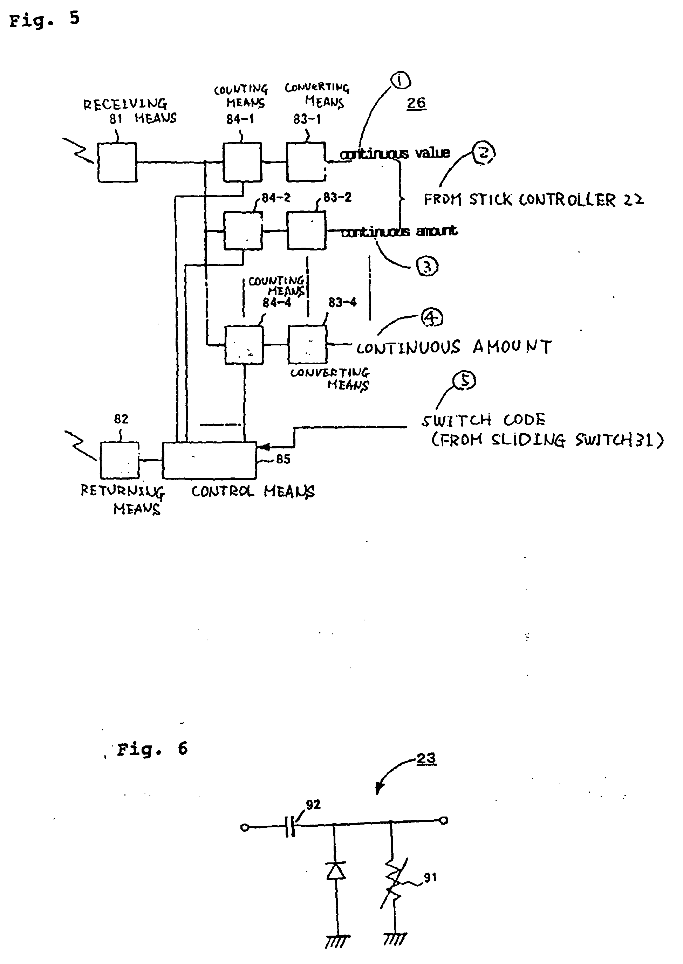

Fig. 5 illustrates important portions of the circuit configuration of the transmitting circuit 26. In Fig. 5, 81 represents receiving means which receives an AC electric field, an AC magnetic field, or an AC electromagnetic field of a certain frequency emitted from the position detector 20; 82 represents a returning means which returns the AC electric field, the AC magnetic field, or the AC electromagnetic field of an arbitrary frequency to the position detector 20; 83-1, 83-2, ..... 83-4 represent converting means which convert a plurality of kinds of information corresponding to a plurality of kinds of operation represented by continuous values into time periods; 84-1, 84-2, ..... 84-4 represent counting means which count and binarize the number of waves of the AC electric field, the AC magnetic filed, or the AC electromagnetic field of the certain frequency received as described above, from among the plurality of time periods converted by the converting means 83-1 to 83-4; and 85 represents control means which causes a change in the AC electric field, the AC magnetic field, or the AC electromagnetic field to be returned to the position detector 20 by controlling the returning means 82 in response to the plurality of binary codes determined by the converting means 84-1 to 84-4. Fig. 5 illustrates the circuit configuration for transmitting four degrees of freedom information corresponding to the four kinds of operation represented by continuous values. The following description covers a case where output signals corresponding to operations of two degrees of freedom, disposed to each other at right angles, of the stick controller 22 serving as the first operational input means 11, and an output signal corresponding to one degree of freedom operation of the sliding switch 31 serving as the second operational input means 12 are transmitted.

The receiving means 81 and the returning means 82 can be composed of a resonance circuit comprising a capacitor connected to the coordinate detecting coil 41 forming the bottom surface input means 14.

Fig. 6 illustrates typical converting means 83-1 and 83-2 shown in Fig. 5, which form, in this embodiment, the time constant circuit 23 comprising individual variable resistance elements 91 of two variable resistance elements whose resistance varies according to the operation of the operating member 21 of the stick controller 22 serving as the first operational input means 11 (more specifically, the resistance varies with the inclination direction and the inclination angle of the operating member 21), and a capacitor 92 connected thereto. Since the discharge characteristics of the time constant circuit 23 vary with a change in the resistance of the variable resistance element 91, it is possible to convert the two degree of freedom information corresponding to operations in the two degrees of freedom expressed by continuous values into times by using a change in the discharge characteristics.

While signals are output from the above-mentioned converting means 83-1 and 83-2, the counting means 84-1 and 84-2 count the number of waves of the induction voltage generated in the resonance circuit by radio waves emitted from the position detector 20. As a result, it is possible to binarize pieces of two degrees of freedom information corresponding to operations in the two degrees of freedom, expressed by continuous values, of the stick controller 22 serving as the first operational input means.

On the other hand, an output signal from the sliding switch 31 serving as the second operational input means 12 is input into the control means 85. This output signal comprises four different switching signals which vary according to the sliding direction and the sliding angle of the lever 32.

The control means 85 causes a change in the resonance characteristics of the resonance circuit forming the returning means 82 in response to the binarized signals output from the counting means 84-1 and 84-2 and the switching code signal. This permits transmission of the two degrees of freedom information expressed by continuous values in response to the operations of the stick controller 22 serving as the first operational input means 11, and one degree of freedom information in response to an operation of the sliding switch 31 serving as the second operational input means 12, from the six degrees of freedom information indicator 1 to the position detector 20.

Fig. 7 illustrates a third operational input means 13 and a bottom surface input means 14 in detail. The third operational input means 13 has a rotary operating member 17, a rotation angle detecting coil 42, and a rotary disk 44. The rotary operating member 17 is supported rotatably around a rotary operating member rotation axis 18 relative to the bottom surface 16 of the enclosure 10, and can be rotated by the fingers of the operator of the six degrees of freedom information indicator 1. More specifically, as shown in the exterior view of Fig. 1, it is possible to rotate the rotary operating member 17 exposed on a side of the enclosure 10 horizontally with the fingers.

The rotary disk 44 is provided so as to be rotatable relative to the bottom surface 16 of the enclosure 10, with the rotational center thereof agreeing with the center of the coordinate detecting coil 41. The rotary disk 44 has a structure permitting contact with the rotary operating member 17 via a rotation movement transmitting means 19, such as a gear. The rotation angle detecting coil 42 is formed by winding a plurality of turns of a signal line around a rod-shaped ferrite core (magnetic core material). A coil holder 43 is at a position shifted from the center on the rotary disk 44, which is in turn provided so as to be freely rotatable around a center axis provided at a position deviated from the rotary disk 44. While the rotation angle detecting coil 42 is fixed relative to the coil holder 43, the coil holder 43 is rotatable around the center axis. The rotation angle detecting coil 42 is therefore freely rotatable around the coil rotation axis.

Signal lines 45 from both ends of the rotation angle detecting coil 42 extend from above the ferrite core toward a control circuit 51. The control circuit 51 comprises a printed board fixed on the bottom surface 16 of the enclosure 10. The signal line 45 is rigid to some extent, and even when the rotary disk rotates and the position of the rotation angle detecting coil 42 varies as a result, this causes the ferrite core of the rotation angle detecting coil 42 to rotate around the center axis thereof so that the end of the signal line 45 is always directed toward the control circuit 51. The signal line 45 has a length such that the line is not broken and does not lose its rigidity even when the rotation angle detecting coil 42 moves to the most distant position from the control circuit 51.

The coordinate detecting coil 41 serving as the bottom surface input means 14 is a ring-shaped (circle) coil fixed to the bottom surface 16 of the enclosure 10, and in the case shown in Fig. 7, an air-core coil (a coil not having a core). For the purpose of obtaining a sufficient magnetic flux intensity, and forming a resonance circuit effective for transmitting and receiving radio waves, the coordinate detecting coil 41 should preferably be wound by a plurality of turns. The coordinate detecting coil 41 has a circular shape which is rotationally symmetric relative to the center of the circle. When an AC current flows through the coordinate detecting coil 41, therefore, a magnetic flux generated therefrom is considered to be rotationally symmetric also.

Fig. 8 illustrates the circuit configuration of part of the control circuit 51 shown in Fig. 7. A capacitor 60 is connected to the coordinate detecting coil 41 to form a resonance circuit 61. A compensating capacitor 62 is connected to the resonance circuit 61. The capacitance of this compensating capacitor 62 is selected so that, upon switching the rotation angle detecting coil 42, the resonance frequency of the resonance circuit 61 matches the frequency of the transmitted wave (transmitted signal) from the tablet 20.

The resonance circuit 61 is connected to a power supply circuit 64, a detector circuit 65, and another detector circuit 66. The detector circuit 65 is connected to an integrating circuit 67 having a larger time constant, and the detector circuit 66 is connected to an integrating circuit 68 having a smaller time constant. The integrating circuit 67 is connected to a comparator 69, and the integrating circuit 68 is connected to a comparator 70. The comparator 69 is connected to a data terminal D of the latch circuit 71, and the comparator 70 is connected to a trigger terminal T of the latch circuit 71.

A switch 72 is connected in series to the compensating condenser 62 connected to the resonance circuit 61, and a switch 73 is connected to the rotation angle detecting coil 42. The output of the latch circuit 71 is connected to both of the switches 72 and 73.

The integrating circuit 67 and the comparator 69 forming a first path 74, whose output is supplied to the data terminal D of the latch circuit 71, are configured so as to output an output signal representing the relationship between the time constant of the integrating circuit 67 and the reference value of the comparator 69 when the transmitting wave from the tablet 20 is transmitted for a first prescribed period of time (for example, a period of time sufficiently longer than 300 $\mu$s). The integrating circuit 68 and the comparator 70 forming a second path 75, whose output is supplied to the trigger terminal T of the latch circuit 71, are configured so as to issue an output signal representing the relationship between the time constant of the integrating circuit 68 and the reference value of the comparator 70 when the transmitting wave from the tablet 20 is transmitted for a second prescribed period of time, which is shorter than the first prescribed period of time (for example, a period of time sufficiently longer than 100 $\mu$s).

The integrating circuit 67 and the integrating circuit 68 are CR circuits each comprising, for example, a resistor and a capacitor in combination, and configured so that, when the resistance of the resistance and the electrostatic capacitance of the capacitance forming the integrating circuit 67 are R1 and C1, respectively, and the resistance of the resistor and the electrostatic capacitance of the capacitor forming the integrating circuit 68 are R2 and C2, respectively, the relation C1R1 > C2R2 is satisfied.

Operations for detecting the XY coordinates and the rotation angle around the Z-axis will now be described with reference to the circuit diagrams shown in Figs. 2 and 8.

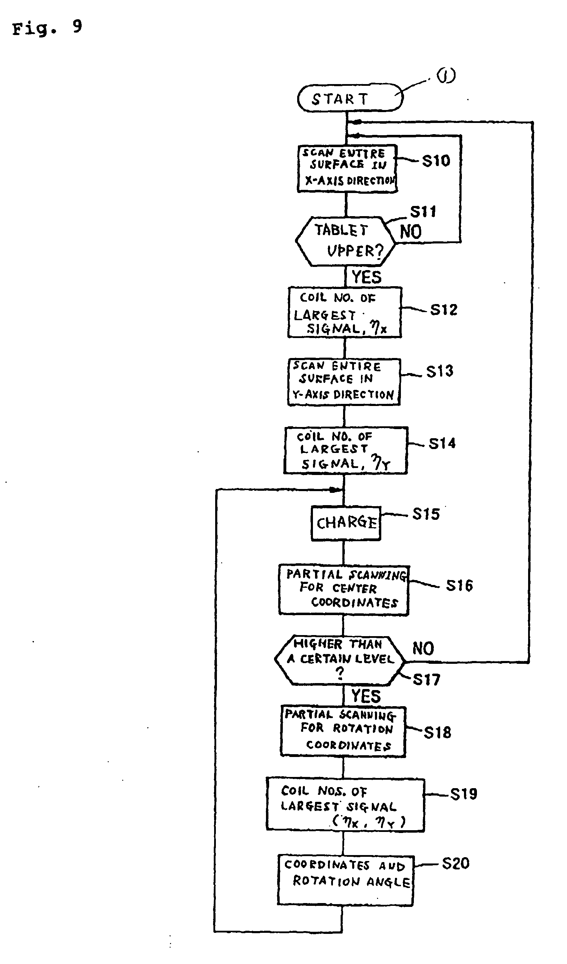

Fig. 9 is a flowchart of the control program, for detecting the XY coordinates and the rotation angle around the Z-axis, executed by the CPU 9 in the tablet 20.

First, X-axis scanning is performed over the entire surface for detecting the position at which the six degrees of freedom information indicator 1 is placed in the X-axis direction of the tablet (step S10).

The CPU 9 causes the selection circuit 2 to select the loop coil $X_1$ to connect the transmission/receiving switching circuit 3 to the transmitting side terminal T, and supplies a sine wave AC signal of the transmitter 24 to the loop coil $X_1$. As a result, a transmitted electromagnetic wave at the resonance frequency is transmitted from the loop coil $X_1$ to the resonance circuit 61 of the six degrees of freedom information indicator 1.

After this transmission for a prescribed period of time (for example, T = 100 $\mu$s), the CPU 9 switches over the transmission/receiving switching circuit 9 to the receiving side, and executes the receiving mode for receiving signals from the six-degree of freedom information indicator 1 for a prescribed period of time (for example, R = 100 $\mu$s).

This operation is individually carried out for all the loop coils $X_1$ to $X_{40}$ in the X-axis direction, and the position of the six degrees of freedom information indicator 1 on the tablet is determined based on the selected loop coil having the largest received signal from the six degrees of freedom information indicator becomes the largest.

On the other hand, in the entire surface scanning mode, the switches 72 and 73 are open, and the resonance circuit 61 is excited by the transmitted electromagnetic wave, thus generating an induction voltage. In the receiving mode, the transmitted wave is discontinued, but radio waves are generated from the coordinate detecting coil 41 due to the effect of the inducted voltage, and this wave in turn excites the selected loop coil of the tablet 20, thereby causing generation of an induced voltage in the loop coil. This induced voltage is maximized in the loop coil closest to the center coordinates of the coordinate detecting coil 41. The center coordinates, i.e., the XY coordinates (two degrees of freedom information), can therefore be determined from among the input six degrees of freedom information.

The CPU 9 repeats the transmission mode and the receiving mode for all the loop coils, by causing the selection circuit 2 to select loop coils to turn sequentially. A transmitted radio wave is transmitted from the loop coil to the six degrees of freedom information indicator 1. The resonance circuit 61 including the coordinate detecting coil 41 is excited by this transmitted wave, thus generating an induced voltage in the resonance circuit 61. After execution of the transmission mode for a prescribed period of time, the tablet 20 enters the receiving mode, and the transmitted wave stops.

Until the induced voltage is attenuated, radio waves due to induced voltage are sent out from the coordinate detecting coil 41 of the six degrees of freedom information indicator 1, and these waves are received by the selected loop coil. The loop coil is excited by these waves, and an induced voltage is generated in the loop coil. This induced voltage is amplified by an amplifier 4. The received signal, amplified by the amplifier 4 is detected in the detector circuit 5, and sent out to the low-pass filter 6. The low-pass filter 6 has a cut-off frequency sufficiently lower than the resonance frequency of the resonance circuit 61, and converts the output signal of the detector circuit 5 into a DC signal. The DC signal is sampled and held in the sample holding circuit 7, undergoes analog to digital conversion in the A/D circuit 8, and is sent out to the CPU 9. The CPU 9 detects the position of the six degrees of freedom information indicator 1 in the X-axis direction on the basis of the level distribution of the received signals converted into digital values. The CPU 9 stores the number of the loop coil where the received signal level becomes the highest as an X-direction position of the six degrees of freedom information indicator 1 (step S12).

In the X-axis scanning over the entire surface, when the received signal level in the tablet 20 is lower than a prescribed threshold value in all cases, the CPU 9 determines that the six degrees of freedom information indicator 1 is not on the tablet, and repeats the X-axis scanning over the entire surface (step S11).

The same operation as that in the X-axis scanning over the entire surface in step S10 is also carried out in the Y-axis direction. The CPU 9 stores the loop coil for which the received signal level becomes the highest as a position in the Y-axis direction on the tablet 20 of the six-degree of freedom information indicator 1 through the same operation as in step S12 (steps S13 and S14).

When the coil number on the tablet 20 specified by the six degrees of freedom information indicator 1 is determined, partial scanning is carried out for five loop coils before and after, and including, this coil (step S16). This partial scanning is aimed at more accurately detecting the position of the six degrees of freedom information indicator 1 placed on the tablet 20 and, when the indicator is moved on the tablet 20, at detecting the locus thereof.

First, a charging operation is started (step S15). More particularly, the CPU 9 causes the selection circuit 2 to select a loop coil stored in step S12, and to connect the transmission/receiving switching circuit 3 to the transmitting-side terminal T. In this state, the CPU 9 transmits the transmitted radio wave from this loop coil to the six degrees of freedom information indicator 1 for a prescribed period of time (T = 300 μs in this embodiment). As a result, an inducted voltage is generated in the resonance circuit 61, and the power source circuit 64 is charged by this induced voltage. The induced voltage is input to both the detector circuits 65 and 66, and a detector output is issued from each of the detector circuits 65 and 66.

This detector output causes an output of the integrating circuit 68 from the second path 75, and a comparator output. However, because the CPU 9 transmits the same for a transmitting period of 300 μs, the comparator 69 does not output from the first path 74.

For charging, the CPU 9 transfers to partial scanning after a prescribed receiving time (for example, R = 100 μs) after the transmitting time T = 300 μs (step S16).

The CPU 9 causes the selection circuit 2 to select the loop coil in the X-axis direction stored in step S12, and connects the transmission/receiving switching circuit 3 to the transmitting-side terminal T. In this state, the loop coil sends the transmitted radio waves to the six degrees of freedom information indicator 1. The resonance circuit 61 including the coordinate detecting coil 41 is excited by the transmitted radio waves, and an induced voltage is generated in the resonance circuit 61. This induced voltage is detected in the detector circuits 65 and 66, and detector outputs are issued. One detector output is integrated in the integrating circuit 68, and the integrated output is compared to a reference value in the comparator 70. Similarly, the other detector output is integrated in the integrating circuit 67, and the integrated output is compared to a reference value in the comparator 69.

Because the transmission mode period by the CPU 9 is T = 100 μs, no output is provided from the first path 74 or the second path 75, no output is provided by the latch circuit 71, and the switches 72 and 73 are left open.

When the switches 72 and 73 are left open, a uniform AC magnetic field is generated from the coordinate detecting coil 41 due to the induced voltage described above produced in the resonance circuit 61. As a result, a center coordinates of the coordinate detecting coil 41 on the tablet 20 are detected.

After the transmission mode period, the CPU 9 causes the selection circuit 2 to select the loop oil stored in step S12, and switches over the transmission/receiving switching circuit 3 to the receiving-side terminal R. In this receiving mode of the loop coil, a receiving signal is obtained in the tablet 20 through the same operations as those described above for step S10. This partial scanning operation selects the loop coil stored in step S12 in the transmission mode, and selects four preceding and following loop coils in the receiving mode, and operations are sequentially carried out.

After this partial scanning in the X-axis direction, partial scanning in the Y-axis direction is similarly carried out for five loop coils before and after, and including, the loop coil stored in step S14.

In this partial scanning operation, if the received signal level is lower than a prescribed threshold value, the CPU 9 determines that the six degrees of freedom information indicator 1 is not on the tablet 20, and returns the process back to step S10 (step S17).

When partial scanning operations described above for detecting the center coordinates in the X-axis direction and in the Y-axis direction are completed, the CPU 9 conducts partial scanning for determining the rotation angle by switching on the rotation angle detecting coil 42 (step S18).

For switching on the rotation angle detecting coil 42, the CPU 9 causes the tablet 20 to transmit transmitted radio waves for a prescribed period of time. That is, the CPU 9 causes the selection circuit 2 to select the loop coil stored in step S12, and connects the transmission/receiving switching circuit 3 to the transmitting-side terminal T. In this state, the CPU 9 transmits transmitted radio waves from this loop coil to the six degrees of freedom information indicator 1. As a result, an inducted voltage is generated in the resonance circuit 61. The generated induced voltage is input to both of the detector circuits 65 and 66, and the detector circuits 65 and 66 each provide a detector output.

The second path 75 has a configuration in which, when the transmitted electromagnetic waves are sent out for a period of time sufficiently longer than 100 $\mu$s (for example, for 200 $\mu$s), the output of the comparator 70 is sent to the latch circuit 71. Since the transmission period of the tablet 20 is 700 $\mu$s, the output of the comparator 70 is provided during this transmission period.

On the other hand, when the transmitted electromagnetic waves are sent out for a period of time sufficiently longer than 300 $\mu$s (for example, for 400 $\mu$s), the first path 74 has a configuration in which the comparator output is issued to the latch circuit 71. Since the transmission period of the tablet 20 is 700 $\mu$s, the comparator output is provided during this transmission period.

The latch circuit 71 operates in response to the trailing edge of the output of the comparator 70, and provides the output from the comparator 69 at this point in time as a latch output. This latch output closes the switches 72 and 73.

After the transmission period for switching on the rotation angle detecting coil 42, the CPU 9 switches to partial scanning for detecting the rotation angle after the lapse of a prescribed receiving period (for example, R = 100 $\mu$s) (step S18).

The CPU 9 causes the selection circuit 2 to select the loop coil stored in step S12, and connects the transmission/receiving switching circuit 3 to the transmitting-side terminal T. In this state, this loop coil sends out the transmitted radio waves to the six degrees of freedom information indicator 1. The resonance circuit 21 including the coordinate detecting coil 41 is excited by these transmitted waves, and an induced voltage is generated in the resonance circuit 61.

When the switches 72 and 73 are closed, the rotation angle detecting coil 42 is switched on. In terms of the magnetic flux inside the coordinate detecting coil 41, in this state, it is difficult for an AC magnetic field to pass through the position of the rotation angle detecting coil 42 due to eddy currents, which tend to flow through the rotation angle detecting coil 42, and the magnetic field is biased toward a position further away from the rotation angle detecting coil 42 inside the coordinate detecting coil 41. Therefore, the position where the radio waves are sent out to the tablet 20 moves toward a position farther from the rotation angle detecting coil 42 along a straight line connecting the center coordinates of the coordinate detecting coil 41 and the central point of the ferrite core of the rotation angle detecting coil 42. As a result, the coordinates detected on the tablet 20 move, and another coordinate representing the rotation around the center axis of the coordinate detecting coil 41 is detected.

After the transmission mode period, the CPU 9 causes the selection circuit 2 to select the loop coil stored in step S12, and switches over the transmission/receiving switching circuit 3 to the receiving-side terminal R. In this receiving mode of the loop coil, a received signal is obtained in the tablet 20 through the same operations as those described above in step S10. Subsequently, partial scanning in the X-axis direction is followed by partial scanning in the Y-axis direction in the same manner as in step S16 (step S18).

The CPU 9 stores the number of the loop coil for which the highest received signal level is detected in partial scanning for the rotation coordinate (step S19).

Then, the CPU 9 calculates the XY coordinates and the rotation angle around the Z-axis (step S20). That is, the CPU 9 acquires the highest received voltage of the loop coil for which the highest received signal level is detected in partial scanning, and the received voltage values of the preceding and following loop coils, and determines the center coordinates value $(X_0, Y_0)$ of the coordinate detecting coil 41 and the rotation coordinate position $(X_1, Y_1)$ after rotation by the third operational input means 13. The CPU 9 determines the rotation angle by the following formula on the basis of this central coordinate value and the rotation coordinate position:

$$\theta = -180° + \tan^{-1}[(X_1 - X_0)/(Y_1 - Y_0)]$$

The rotation angle mentioned above is an absolute rotation angle obtained by setting an X-Y coordinate system in parallel with the X-axis and the Y-axis on the tablet 20 with the detected center coordinates as an origin, and adopting a range of $\theta$ of $-180° < \theta \leq +180°$ with the positive direction of the Y-axis as a reference ($\theta = 0$).

It is possible to detect one degree of freedom information in response to the rotating operation of the rotary operating member 17 serving as a third operational input means 13, and two degrees of freedom information in the position detecting device 20 in response to movement of the coordinate detecting coil 41 serving as bottom surface input means 14 on the tablet surface.

In the six degrees of freedom information indicator 1 of this embodiment, as described above, the first operational input means 11 can enter two degrees of freedom information by operating an operating member projecting from the front portion of the upper surface of the enclosure 10; the second operational input means 12 can enter one-degree of freedom information by operating the sliding switch 31 exposed on the side of the enclosure 10; the third operational input means 13 can enter absolute rotation angle information (one degree of freedom information) around an axis forming a right angle with the tablet surface (Z-axis) by operating the rotary operating member 17 exposed on the side of the enclosure 10; and the bottom surface input means 14 can enter information of the XY coordinates (two degrees of freedom information) by operating within a plane in parallel with the tablet surface.

A case of performing moving and rotating input operation of an object in a virtual 3D space displayed on a screen of the computer 30 by use of the six degrees of freedom information indicator 1 having the configuration as described above will now be described in detail.

Displacement of the operating member 21 of the first operational input means 11 corresponds to displacement of the stick controller 22, and it is tiltable within a range of about 30° in all directions. After operation, it automatically returns to the initial position thereof. Because the stick controller 22 has two rotary variable resistance elements crossing each other at right angles, the resistance of the two rotary variable resistance elements continuously varies in response to the inclination direction and the inclination angle of the operating member 21. Two pieces of degree of freedom information corresponding to operations represented by these continuous values are binarized by the transmitting circuit 26, and transmitted to the computer 30 via the position detector 20.

The inclination direction of the operating member 21 can agree with the rotating direction which is a synthesized component of PITCH and ROLL of the object in a virtual 3D space. It can therefore be easily processed by software of the computer 30 as two degrees of freedom information for controlling the rotating direction. In this configuration, however, the operating member 21 can be tilted by only 30° at most. Control is therefore based on relative rotation angle control using the automatic returning mechanism. For improving operability, therefore, it is desirable to use the inclination angle of the operating member 21 as a rotation speed of the object.

The lever 32 of the sliding switch 31 serving as the second operational input means 12 can vertically slide by about 25° perpendicularly to the tablet surface of the position detector 20. After operation, it automatically returns to the initial position thereof.

The sliding switch 31 outputs four kinds of switch codes varying with the sliding direction and the sliding angle of the lever 32. This code information is transmitted to the computer 30 by the transmitting circuit 23 via the position detector 20.

Vertical movement of the lever 32 can be made to agree with the movement of the Z coordinates of the object in the virtual 3D space. It can therefore be directly processed as one-degree of freedom information for controlling the movement of the Z coordinates by software in the computer 30. In this configuration, however, control is based on relative coordinate control using two kinds of code information on one side and the automatic returning mechanism. For improving operability, therefore, it is desirable to use these different code as a change in the moving speed of the object (the amount of coordinate movement per scanning operation of the position detector 20).

Movement of the rotary operating member 17 serving as the third operational input means 13 is a rotation in parallel with the tablet surface, causing the rotation angle detecting coil 42 to rotate around the center coordinates of the coordinate detecting coil 41 via the rotation transmitting means 19. An absolute rotation angle within a range of 0 to 359° is transmitted to the computer 30 through processing by the control circuit 51 and the coordinate detector 20 in response to the rotation angle detecting coil 42.

The rotation angle of the rotary operating member 17 can be made to agree directly with Yaw of the object in the virtual 3D space. It is therefore possible to easily process the same directly as one degree of freedom information for controlling the Z-axis rotation angle by software in the computer 30.

Finally, the center coordinates of the coordinate detecting coil 41 serving as the bottom surface input means 14 are detected by the position detector 20 as XY coordinates in response to the operation carried out on the tablet surface of the enclosure 10 of the six degrees of freedom information indicator 1. Two degrees of freedom information of the X-Y coordinate displacement of the object in the virtual 3D space therefore uses the XY coordinates themselves on the tablet surface of the six degrees of freedom information indicator 1.

By adopting the configuration described above, it is possible to achieve a six degrees of freedom information input unit having a plurality of operational input means and a bottom surface input means corresponding to the displacement and rotation of the object in a 3D space.

In the six degrees of freedom information indicator of the present invention, it is possible to change the enclosure shape, the form of the plurality of operational input means, and arrangement thereof in various manners. Some such modifications will briefly be described with reference to the drawings.

[Modifications]

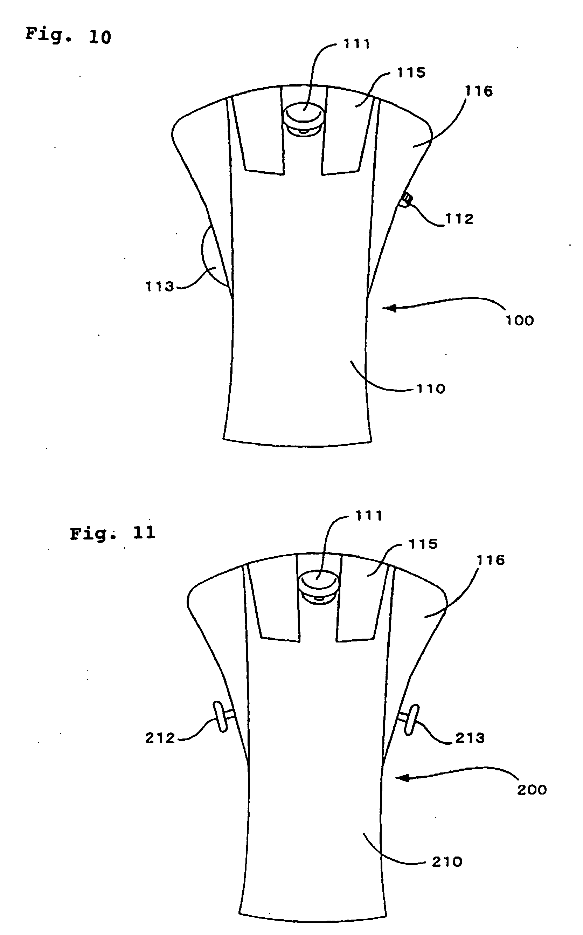

Fig. 10 is a plan view illustrating an exterior view of the six degrees of freedom information indicator of a second embodiment of the invention. In this embodiment, the six degrees of freedom information indicator 100 has a configuration in which an operating member 111 of a stick controller projecting from the front portion of the upper surface of an enclosure 110 enters two degrees of freedom information for controlling the rotating directions around the X-axis and the Y-axis, respectively; a lever 112 of a sliding switch exposed from a side surface of the enclosure 110 enters one degree of freedom information for controlling the displacement of the Z-coordinate; and a rotary operating member 113 exposed from the other side of the enclosure 110 enters one degree of freedom information for controlling the absolute rotation angle around the Z-axis. In Fig. 10, 115 represents an operating switch usually used in a mouse, and 116 represents a pair of finger rests having an anti-slip function by sticking felt or the like to the surface thereof, arranged at symmetrical positions to the right and left on the upper surface of the enclosure. The finger rests 116 are effective for supporting the movement of the fingers not in touch with the operating member during operation, thus improving the ease of use.

Fig. 11 is a plan view illustrating an exterior view of the six degrees of freedom information indicator of a third embodiment of the invention. The same components as those shown in Fig. 10 are assigned the same reference numerals. In this embodiment, an operating member 212 exposed on a side of the enclosure 210 of the six degrees of freedom information indicator 200 is an operating member of a stick controller similar to that used in the first embodiment described above, and has a configuration in which operation in a direction perpendicular to the tablet surface (vertical) enters one degree of freedom information for controlling the Z-axis displacement, and operation in parallel with the tablet surface (front-back) enters one degree of freedom information for controlling the rotation angle around the Z-axis. For this purpose, a change is made in the transmitting circuit 26 so that continuous changes in the resistance values of the two rotary variable resistance elements of this stick controller are input to converting means 83-3 and 83-4. In this embodiment, another operating member 213 is provided, exposed at left and right symmetrical positions of the operating member 212 on the other side of the enclosure, as shown in Fig. 11. This operating member 213 is for achieving the same configuration and the same functions as in the above-mentioned operating member 212 also for this operating member 213. As a result, it is possible to enter two degrees of freedom information by operating either the operating member 212 or the operating member 213 depending on the operator's dominant hand holding and operating the six degrees of freedom information indicator 210. According to this embodiment, it is possible to achieve an input environment in which operation is permitted by either the right hand or the left hands. It is effective particularly when using it as a one-handed position indicator in a multi-mode of the position detector 20 (a mode in which a plurality of position indicators are used).

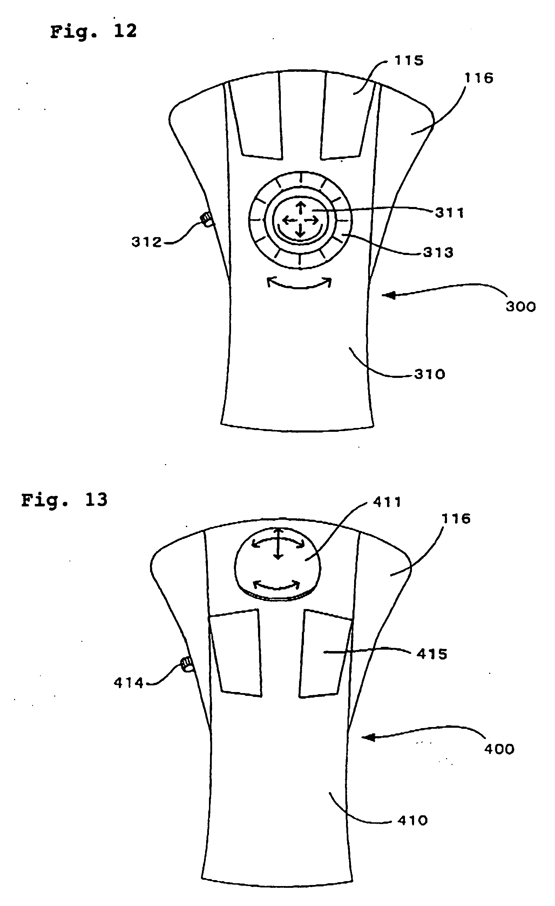

Fig. 12 is a plan view illustrating an exterior view of the six-degree of freedom information indicator of a fourth embodiment of the present invention. The same components as in Fig. 10 are assigned the same reference numerals. In this embodiment, the six degrees of freedom information indicator 300 has a multi-functional operational input means capable of entering three degrees of freedom information toward the center of the front upper surface of the enclosure 310. A typical multi-functional input means is a RKJXM-switch-type multi-functional operating device made by Alps Electric Co., Ltd. which is an input device based on a combination of an eight-direction detector switch and a dual-phase encoder. The input device shown has a configuration in which two degrees of freedom information for controlling rotation around the X-axis and Y-axis, respectively, are entered by operating an inner-axis stick switch 311, and one degree of freedom information for controlling the Z-axis displacement is entered by rotation-operating an outer-axis encoder section 313. One degree of freedom information for controlling the Z-axis displacement is entered by means of the lever 312 of the sliding switch exposed at a side of the enclosure 310.

Fig. 13 is a plan view illustrating an exterior view of the six degrees of freedom information indicator of a fifth embodiment of the present invention. The same components as in Fig. 10 are represented by the same reference numerals. In this embodiment, two degree of freedom information for controlling the rotation around the X-axis and the Y-axis, respectively, and one degree of freedom information for controlling the rotation around the Z-axis, that is, three degrees of freedom information in total, are entered by rotating-operation in these mutually perpendicular directions of a trackball 411 provided on the front upper surface of the enclosure 410 of the six degrees of freedom information indicator 400; and one degree of freedom information for controlling the Z-coordinate displacement is entered by rotating a rotary operating member 414 of a rotary encoder provided on a side of the enclosure 410 (an operation of causing rotation of the operating member within a plane perpendicular to the tablet surface). The spherical surface of the trackball 411 is in contact with a rotary member (not shown) connected to rotation shafts of three rotary encoders provided in response to the number of pieces of degree of freedom information thereby controlled, and each of these encoders issues a code signal in response to the rotating direction and the amount of rotation of the mutually perpendicular trackball spherical surfaces. The encoder on the side of the enclosure issues a code signal in response to the rotating direction and the amount of rotation of the rotary operating member 414. The output signals generated by these encoders are entered into the computer 30 via the position detector 20 by entering them into the control means 85 of the transmitting circuit 26.

In the above-mentioned fifth embodiment of the invention, use of an inertial wheel having a large inertial moment as a rotary operating member 414 of the rotary encoder provided on the side of the enclosure is advantageous because of the improvement of operability. The inertial wheel, once rotated, tends to continue rotational motion under the effect of inertia even after removing the fingers. It is therefore possible to generate a large amount of rotation by a single operation of fingers which instantaneously causes high-speed rotation of the inertial wheel. It is thus possible to provide an input operational environment suitable for controlling a high-speed displacement or a large displacement in the Z-axis direction. In this case, a noncontact encoder such as an optical rotary encoder should preferably be adopted. Any other type of encoder may also be used.

The six degrees of freedom information indicator originally permits input of six degrees of freedom information corresponding to the displacement and rotation of the object in a 3D space into the computer. It is also possible to execute processing for prohibiting input of a prescribed number of pieces of degree of freedom information which the operator does not wish to enter, by means of software. This makes it possible to use the same as a conventional GUI navigation indicator. A configuration may be adopted in which a simultaneous control mode and an independent control mode can be selected by using a number of kinds of operational input means in response to various applications used in the computer, or by software-processing input information from the operational input means in a driver for the tablet or in the above-mentioned applications.

According to the present invention, as described above, it is possible to provide an input operating environment in which control of six degrees of freedom information, as typically represented by displacement and rotation of an object in a virtual 3D space, can be achieved with a sense of operating the spatial object itself by moving the six degrees of freedom information indicator on a position detector and operating a plurality of operational input means with fingers, and this is applicable also to a wide range of application environments such as computer graphics and 3D CAD, which require input in a plurality of degrees of freedom.

According to the present invention, it is possible to provide an input operating environment in which the operator can independently enter a plurality of degrees of freedom using a single hand while operating a plurality of operational input means, with the thumb and the forefinger relatively free to move.

In the present invention, the operator can acquire a sense of operating the object itself by correlating the movement of the operating means and the movement of the 3D object, thereby permitting the operator to more intuitively operate the device.

FIG. 2

    5: DETECTOR

FIG. 5

    (1) CONTINUOUS VALUE
    (2) FROM STICK CONTROLLER 22
    (3) CONTINUOUS AMOUNT
    (4) CONTINUOUS AMOUNT
    (5) SWITCH CODE (FROM SLIDING SWITCH 31)
    81: RECEIVING MEANS
    82: RETURNING MEANS
    83-1: CONVERTING MEANS
    83-2: CONVERTING MEANS

83-4: CONVERTING MEANS
84-1: COUNTING MEANS
84-2: COUNTING MEANS
84-4: COUNTING MEANS
85: CONTROL MEANS

FIG. 8

64: POWER SOURCE CIRCUIT
65: DETECTOR CIRCUIT
66: DETECTOR CIRCUIT
67: INTEGRATING CIRCUIT (t: LARGE)
68: INTEGRATING CIRCUIT (t: SMALL)
69: COMPARATOR
70: COMPARATOR
71: T LATCH

FIG. 9

(1) START
S10: SCAN ENTIRE SURFACE IN X-AXIS DIRECTION
S11: TABLET UPPER?
S12: COIL NO. OF LARGEST SIGNAL, $\eta_x$
S13: SCAN ENTIRE SURFACE IN Y-AXIS DIRECTION
S14: COIL NO. OF LARGEST SIGNAL, $\eta_y$
S15: CHARGE
S16: PARTIAL SCANNING FOR CENTER COORDINATES
S17: HIGHER THAN A CERTAIN LEVEL?
S18: PARTIAL SCANNING FOR ROTATION COORDINATE
S19: COIL NOS. OF LARGEST SIGNAL ($\eta_X$, $\eta_Y$)
S20: COORDINATES AND ROTATION ANGLE

**Claims**

1. A six degrees of freedom information indicator (1) used in combination with a position detector (20), using electromagnetic induction, which enables an operator to enter six degrees of freedom information into a computer (30) by operating the indicator (1) while holding the indicator (1) onehanded; comprising:

   an enclosure (10) having a bottom surface (16);
   a plurality of operational input means (11, 12, 13), provided at a portion touched by the operator's fingers on said enclosure (10) of said six degrees of freedom information indicator (1) and operable by the operator's fingers independently of each other;
   bottom surface input means (14) comprising a coordinate detecting coil (41) provided on the bottom surface (16) of said enclosure (10) of said six degrees of freedom information indicator (1);
   wherein
   four degrees of freedom information are entered by the operator operating said plurality of operational input means (11, 12, 13) and two degrees of freedom information in each of the X and Y directions are entered by entering and moving said enclosure (10) of said six degrees of freedom information indicator (1) within a plane of said position detector (20) in parallel with said bottom surface (16),
   **characterized in that** it comprises transmitting means which transmits to said position detector (20) one or more degrees of freedom information signals, corresponding to the operator operating at least one input means from among said plurality of operational input means (11, 12, 13), by using electromagnetic induction and that one of said plurality of operation input means (13) comprises

a rotary member (44) which performs rotating movement around the center of said coordinate detecting coil (41) ;
an operating member (17) which causes said rotary member (44) to rotate when operated by the operator;
a rotation angle detecting coil (42), which is provided on the rotary member (44) at a position shifted from the center of said coordinate detecting coil 1 (41), so that its position relative to the coordinate detecting coil (41) varies along with rotation of said rotary member (44), and having a radius smaller than that of said coordinate detecting coil (41); and
a control circuit (51) for controlling the open/closed state of at least said rotation angle detecting coil (42) and for causing a change in the distribution of magnetic flux passing through the coordinate detecting coil (41);
wherein absolute rotation angle information around the Z-axis is detected by use of electromagnetic induction when the operator rotates said operating member (17).

2. A six-degree of freedom information indicator according to claim 1, wherein:

said transmitting means comprises:

receiving means (81) which receives an AC electric field, an AC magnetic field, or an AC electromagnetic field of a certain frequency irradiated from said position detector (20);
returning means (82) which returns an AC electric field, an AC magnetic field, or an AC electromagnetic field of the certain frequency to said position detector (20);
converting means (83-1, 83-2, 83-3, 83-4) which converts one or more pieces of degree-of-freedom information, corresponding to the operation of at least one operational input means (11, 12, 13) from among said plurality of operational input means (11, 12, 13), into time periods;
counting means which performs binaization by counting the number of waves of the AC electric field, the AC magnetic field, or the AC electromagnetic field of the certain frequency thus received during one or more time periods converted by said converting means; and
control means (85) which controls said receiving means (81) in response to binary codes representing a plurality of pieces of degree-of-freedom information determined by said counting means, and causes a change in the AC electric field, the AC magnetic field, or the AC electromagnetic field to be returned to the position detector (20) side.

3. A six degrees of freedom information indicator according to claim 2, wherein:

said receiving means (81) and said returning means (82) are resonance circuits comprising said coordinate detecting coil (41).

4. A six degrees of freedom information indicator according to any preceding claim, wherein:

at least one of said plurality of operational input means has a time constant circuit (23), and acquires a continuous amount of operation by the operator as continuous amount of operation by the operator as continuous analog information.

5. A six degrees of freedom information indicator according to any preceding claim, wherein:

at least one of said plurality of operational input means has a switch detecting circuit, and acquires discrete amount of operation by the operator as discrete digital information.

6. A six degrees of freedom information indicator according to any preceding claim, wherein:

each of said plurality of operational input means has an inertial wheel, and movement information in the Z-axis direction is entered through inertial rotation of said inertial wheel.

7. A six degrees of freedom information indicator according to any preceding claim, wherein:

at least one of said operational input means (11) comprises a stick controller (22) or a sliding switch (31) which automatically returns to an initial position when the operator releases said operational input means (22).

8. A six degrees of freedom information indicator according to any preceding claim, wherein:

said plurality of operational input means is an absolute information input means which maintains the information upon completion of operation when the operator releases said operational input means.

9. An indicating method using a six degrees of freedom information indicator (1) in combination with a position detector (20) using electromagnetic induction, which method enables an operator to enter six degrees of freedom information into a computer (30) by operating the indicator (1) while the operator holds the indicator one-handed, comprising:

an operational input detecting step of detecting that the operator operates a plurality of operational input means (11, 12, 13) provided on the portion on an enclosure (10) of said six degrees of freedom information indicator (1) touched by the operator's fingers and independently operable by the operator's fingers;
a four degrees of freedom information input step of entering into a computer (30) information processed in said signal transmitting step, except for X and Y information, as four degrees of freedom information; and
an X/Y information input step of entering, by means of bottom surface input means (14) provided on the bottom surface (16) of said six-degree of freedom information indicator (1), two degrees of freedom information as a result of detecting that the operator moves said six degrees of freedom information indicator (1) as two degrees of freedom information, into the computer, **characterized in that** it comprises a signal transmitting step of transmitting to said position detector (20) one or more signals corresponding to the operation detected in said operational input detecting step, by use of electromagnetic induction; and that
the four degrees of freedom information input step comprises an input step of detecting the rotation of a rotation angle detecting coil (42) relative to a coordinate detecting coil (41) around the center of the coordinate detecting coil (41) as a result of the operation by the operator causing the rotation of the rotary member (44) of one of said plurality of operational input means (13) relative to the coordinate detecting coil (41) of the bottom surface input means (14) provided on the bottom surface (16) of said six degrees of freedom information indicator (1), and entering the detected coordinate as one degree of freedom information into the computer.

**Patentansprüche**

1. Informationsindikator für sechs Freiheitsgrade (1), der in Kombination mit einem Positionsdetektor (20) mittels elektromagnetischer Induktion verwendet wird, und der es einem Anwender ermöglicht, Informationen für sechs Freiheitsgraden in einen Computer (30) einzugeben, indem der Indikator (1) bedient wird, während der Indikator (1) mit einer Hand gehalten wird; umfassend:

ein Gehäuse (10), das eine Bodenfläche (16) aufweist;
eine Anzahl von Bedieneingabemitteln (11, 12, 13), die in einem Bereich an dem Gehäuse (10) des Informationsindikators für sechs Freiheitsgrade (1) vorgesehen sind, der von den Fingern des Benutzers berührt wird, und die von den Fingern des Bedieners unabhängig voneinander bedient werden können;
Eingabemittel (14) an der Bodenfläche, umfassend eine Koordinatendetektions-Spule (41), die an der Bodenfläche (16) des Gehäuses (10) des Informationsindikators für sechs Freiheitsgrade (1) vorgesehen ist;

wobei:

Informationen für vier Freiheitsgrade von dem Bediener eingegeben werden, indem er die Bedieneingabemittel (11, 12, 13) bedient, und Informationen für zwei Freiheitsgrade in jeder der X- und Y-Richtungen durch Eingabe und Bewegung des Gehäuses (10) des Informationsindikators für sechs Freiheitsgrade (1) innerhalb einer Ebene des Positionsdetektors (20) parallel zu der Bodenseite (16) eigegeben werden,
**dadurch gekennzeichnet, dass**
der Informationsindikator für sechs Freiheitsgrade (1) Übertragungsmittel umfasst, die an den Positionsdetektor (20) Informationssignale für einen oder mehrere Freiheitsgrade entsprechend einer Bedienung wenigstens eines Eingabemittels von der Anzahl von Bedieneingabemitteln (11, 12, 13) durch die Bedienungsperson übertragen, indem elektromagnetische Induktion verwendet wird, und dass eines der Bedieneingabemittel (13)
ein Drehteil (44), das Drehbewegungen um das Zentrum der Koordinatendetektions-Spule (41) ausübt,
ein Bedienelement (17), das das Drehteil (44) in Rotation versetzt, wenn es vom Bediener bedient wird,
eine Spule (42), die den Rotationswinkel detektiert und die an dem Drehteil (44) an einer Position, die vom Zentrum der Koordinatendetektions-Spule (41) in der Art verschoben ist, dass ihre Position relativ zu der Koordinatendetektions-Spule (41) mit der Rotation des Drehteils (44) variiert, vorgesehen ist, und die einen Radius aufweist, der kleiner ist als der Radius von der Koordinatendetektions-Spule (41), und
einen Steuerkreis (51), um den Auf/Zu-Zustand mindestens von der Spule (42), die den Rotationswinkel detektiert, steuert, und um eine Veränderung in der Verteilung des magnetischen Flusses zu verursachen, der durch die Koordinatendetektions-Spule (41) fließt, umfasst;

wobei die Information über den absoluten Rotationswinkel um die Z-Achse mittels elektromagnetischer Induktion detektiert wird, wenn der Bediener das Bedienelement (17) rotiert.

2. Informationsindikator für sechs Freiheitsgrade (1), nach Anspruch 1, wobei:

die Übertragungsmittel umfassen:

Empfangsmittel (81), die ein elektrisches Wechselfeld, ein magnetisches Wechselfeld oder ein elektromagnetisches Wechselfeld einer bestimmten Frequenz empfangen, das von dem Positionsdetektor (20) abgestrahlt wird;

Rücksignalmittel (82), die das elektrische Wechselfeld, das magnetische Wechselfeld oder das elektromagnetische Wechselfeld der bestimmten Frequenz an den Positionsdetektor (20) zurücksenden;

Umwandlungsmittel (83-1, 83-2, 83-3, 83-4), die einen oder mehrere Teile der Information für Freiheitsgrade entsprechend der Bedienung von mindestens einem Bedieneingabemittel (11, 12, 13) von der Anzahl von Bedieneingabemitteln (11, 12, 13) in Zeitperioden umwandeln;

Zählmittel, die eine Binarisierung durchführen, indem die Anzahl von Wellen des elektrischen Wechselfeldes, des magnetischen Wechselfeldes oder des elektromagnetischen Wechselfeldes der bestimmten Frequenz gezählt werden, die empfangen wurden, während einer oder mehrerer Zeitperioden, die von dem Umwandlungsmittel umgewandelt wurden; und

Steuermittel (85), welche die Empfangsmittel (81) in Reaktion auf die Binärcodes, die eine Anzahl von Teilen der Information für Freiheitsgrade repräsentieren, die mit den Zählmitteln bestimmt wurden steuern, und eine Veränderung in dem elektrischen Wechselfeld, dem magnetischen Wechselfeld oder dem elektromagnetischen Wechselfeld verursachen, das zu der Seite des Positionsdetektors (20) zurückgegeben wird.

3. Informationsindikator für sechs Freiheitsgrade (1), nach Anspruch 2, wobei:

die Empfangsmittel (81) und die Rücksignalmittel (82) Resonanzkreise sind, die die Koordinatendetektions-Spule (41) umfassen.

4. Informationsindikator für sechs Freiheitsgrade (1), nach einem der vorhergehenden Ansprüche, wobei:

wenigstens eines der Anzahl von Bedieneingabemitteln eine Zeitkonstantenschaltung (23) aufweist, und eine kontinuierliche Menge an Bedienung durch den Bediener als kontinuierliche analoge Information erfasst.

5. Informationsindikator für sechs Freiheitsgrade (1), nach einem der vorhergehenden Ansprüche, wobei:

wenigstens eines der Anzahl von Bedieneingabemitteln eine Wechsel-Detektionsschaltung aufweist und eine diskrete Menge an Bedienung durch den Bediener als diskrete digitale Information erfasst.

6. Informationsindikator für sechs Freiheitsgrade (1), nach einem der vorhergehenden Ansprüche, wobei:

jedes von der Anzahl von Bedieneingabemitteln (11, 12, 13) ein Massenschwungrad aufweist, und Bewegungsinformation in der Z-Achsen-Richtung über Rotation des Massenschwungrades eingegeben wird.

7. Informationsindikator für sechs Freiheitsgrade (1), nach einem der vorhergehenden Ansprüche, wobei:

wenigstens eines von der Anzahl von Bedieneingabemitteln (11) eine Knüppelsteuerung (22) oder einen Schiebe-Schalter (31) aufweist, welcher automatisch in die Ausgangsposition zurückkehrt, wenn der Bediener das Bedieneingabemittel (22) loslässt.

8. Informationsindikator für sechs Freiheitsgrade (1), nach einem der vorhergehenden Ansprüche, wobei:

die Anzahl der Bedieneingabemittel Eingabemittel für absolute Information sind, welche die Information nach Fertigstellung der Bedienung erhalten, wenn der Bediener die Bedieneingabemittel loslässt.

9. Anzeigeverfahren unter Verwendung eines Informationsindikators für sechs Freiheitsgrade (1), in Kombination mit einem Positionsdetektor (20) mittels elektromagnetischer Induktion, die es einem Bediener ermöglicht, Informationen für sechs Freiheitsgrade in einen Computer (30) einzugeben, indem der Indikator (1) bedient wird, während der Bediener den Indikator einhändig hält, umfassend:

einen Detektionsschritt zur Bedieneingabe, bei dem detektiert wird, dass der Bediener die Anzahl der Bedieneingabemittel (11, 12, 13) bedient, die in einem Bereich an dem Gehäuse (10) des Informationsindikators für sechs Freiheitsgrade (1) vorgesehen sind, der von den Fingern des Benutzers berührt wird, und die von den Fingern des Bedieners unabhängig voneinander bedient werden können;

einen Eingabeschritt für Information für vier Freiheitsgrade, bei dem die Information, die in dem Signal-Übertragungsschritt verarbeitet wurde, in den Computer, mit Ausnahme der X und Y Information, als Information für vier Freiheitsgrade eingegeben wird; und

einen X/Y-Informations-Eingabeschritt, bei dem unter Verwendung der bodenseitigen Eingabemittel (14), die an der Bodenseite (16) des Informationsindikators für sechs Freiheitsgrade (1) vorgesehen sind, Information für zwei Freiheitsgrade als Ergebnis von der Detektion, dass der Bediener den Informationsindikator für sechs Freiheitsgrade (1) bewegt, als Information für zwei Freiheitsgrade in den Computer eingegeben wird,

**dadurch gekennzeichnet, dass**

das Verfahren einen Signal-Übertragungsschritt umfasst, bei dem an den Positionsdetektor (20) eines oder mehrere Signale entsprechend der Bedienung, die in dem Detektionsschritt zur Bedieneingabe detektiert wurde, unter Verwendung elektromagnetischer Induktion übertragen werden; und dass

der Eingabeschritt für Information für vier Freiheitsgrade einen Eingabeschritt umfasst, bei dem die Rotation einer Spule (42), die einen Rotationswinkel relativ zu einer Koordinaten-Detektionsspule (41) um das Zentrum der Koordinaten-Detektionsspule (41) detektiert, als Ergebnis der Bedienung durch den Bediener, der die Rotation des Drehteils (44) eines der Anzahl von Bedieneingabemitteln (13) relativ zu der Koordinaten-Detektionsspule (41) der Eingabemittel (14) an der Bodenfläche, die an der Bodenseite (16) des Informationsindikators für sechs Freiheitsgrade (1) vorgesehen sind, verursacht, detektiert wird, und die detektierte Koordinate als Information für einen Freiheitsgrad in den Computer eingegeben wird.

**Revendications**

1. Indicateur de six degrés de l'information de liberté (1) utilisé en combinaison avec un détecteur de position (20), utilisant l'induction électromagnétique, qui permet à un opérateur introduire six degrés de l'information de liberté dans un ordinateur (30) par l'actionnement de l'indicateur (1) pendant qu'en tenant l'indicateur (1) avec une seule main: comprenant:

- une enceinte (10) ayant une surface inférieure (16);
- une pluralité de moyens d'entrée opérationnels (11, 12, 13), pourvus avec une portion touchée par les doigts de l'opérateur sur ladite enceinte (10) dudit indicateur de six degrés de l'information de liberté (1) et actionnables par les doigts de l'opérateur indépendamment l'un de l'autre;
- le moyen d'entrée pour la surface inférieure (14) comprenant une bobine de détection de coordonnées (41) pourvue sur la surface inférieure (16) de ladite enceinte (10) dudit indicateur de six degrés de l'information de liberté (1);

où quatre degrés de l'information de liberté sont introduits par l'opérateur actionnant ladite pluralité de moyens d'entrée opérationnels (11, 12, 13) et deux degrés de l'information de liberté dans chacune d'entre les directions X et Y sont introduits en introduisant et en mouvant ladite enceinte (10) dudit indicateur de six degrés de l'information de liberté (1) dans un plan dudit détecteur de position (20) en parallèle avec ladite surface inférieure (16), **caractérisé en ce qu'**il comprend le moyen de transmission qui transmet audit détecteur de position (20) un ou plusieurs degrés de signaux de l'information de liberté, correspondant à l'opérateur actionnant au moins un moyen d'entrée parmi ladite pluralité de moyens d'entrée opérationnels (11, 12, 13), en utilisant l'induction électromagnétique et que l'une de ladite pluralité de moyens d'entrée d'actionnement (13) comprend:

- un élément de rotation (44) qui réalise le mouvement de rotation autour le centre de ladite bobine de détection de coordonnées (41);
- un élément d'actionnement (17) qui fait tourner ledit élément de rotation (44) quant actionné par l'opérateur;
- une bobine de détection d'angle de rotation (42), qui est pourvue sur l'élément de rotation (44) à une position décalée du centre de ladite bobine de détection de coordonnées (41), de sorte que sa position relative à la bobine de détection de coordonnées (41) varie avec la rotation dudit élément de rotation (44), et ayant un rayon plus petit que celui de ladite bobine de détection de coordonnées (41); et
- un circuit de commande (51) pour commander l'état ouvert/fermé d'au moins ladite bobine de détection de l'angle de rotation (42) et pour causer un changement dans la distribution de flux magnétique passant par la bobine de détection de coordonnées (41);

où l'information pour l'angle de rotation absolu autour l'axe Z est détectée par l'utilisation d'induction électromagnétique quand l'opérateur tourne ledit élément d'actionnement (17).

2.  Indicateur de six degrés de l'information de liberté selon la revendication 1, où:

- ledit moyen de transmission comprend:
- le moyen de réception (81) qui reçoit un champ électrique AC, un champ magnétique AC, ou un champ électromagnétique AC d'une certaine fréquence irradiés dudit détecteur de position (20);
- le moyen de renvoi (82) qui retourne un champ électrique AC, un champ magnétique AC, ou un champ électromagnétique AC d'une certaine fréquence audit détecteur de position (20);
- le moyen de conversion (83-1, 83-2, 83-3, 83-4) qui convertit une ou plusieurs parties de l'information à degré-de-liberté, correspondant à l'actionnement d'au moins un moyen d'entrée opérationnel (11, 12, 13) parmi ladite pluralité de moyens d'entrée opérationnels (11, 12, 13), dans les périodes de temps;
- le moyen de comptage qui réalise le codage binaire en comptant le nombre d'ondes du champ électrique AC, du champ magnétique AC, ou du champ électromagnétique AC de certaine fréquence ainsi reçue pendant une ou plusieurs périodes de temps converties par ledit moyen de conversion; et
- le moyen de commande (85) qui commande ledit moyen de réception (81) en réponse aux codes binaires représentant une pluralité de parties d'information à degré-de-liberté déterminées par ledit moyen de comptage, et cause un changement dans le champ électrique AC, le champ magnétique AC, ou le champ électromagnétique AC pour être retourné au côté de détecteur de position (20).

3.  Indicateur de six degrés de l'information de liberté selon la revendication 2, où:

- ledit moyen de réception (81) ledit moyen de renvoi (82) sont des circuits de résonance comprenant ladite bobine de détection de coordonnées (41).

4.  Indicateur de six degrés de l'information de liberté selon l'une quelconque de la revendication antérieure, où:

- au moins l'une de ladite pluralité de moyens d'entrée opérationnels présente un circuit constant de temps (23), et obtient une quantité continue d'actionnement par l'opérateur comme quantité continue d'actionnement par l'opérateur comme information analogue continue.

5.  Indicateur de six degrés de l'information de liberté selon l'une quelconque de la revendication antérieure, où:

- au moins l'une de ladite pluralité de moyens d'entrée opérationnels présente un circuit de détection de commutateur, et obtient la quantité discrète d'actionnement par l'opérateur comme de l'information digitale discrète.

6.  Indicateur de six degrés de l'information de liberté selon l'une quelconque de la revendication antérieure, où:

- chacune de ladite pluralité de moyens d'entrée opérationnels présente une roue d'inertie, et l'information de mouvement dans la direction Z est introduite par la rotation d'inertie de ladite roue d'inertie.

7.  Indicateur de six degrés de l'information de liberté selon l'une quelconque de la revendication antérieure, où:

- au moins l'un desdits moyens d'entrée opérationnels (11) comprend un contrôleur (22) ou un commutateur glissant (31) qui retourne automatiquement à une position initiale quand l'opérateur libère ledit moyen d'entrée opérationnel (22).

8.  Indicateur de six degrés de l'information de liberté selon l'une quelconque de la revendication antérieure, où:

- ladite pluralité de moyens d'entrée opérationnels est un moyen d'entrée d'information absolue qui maintient l'information après l'achèvement d'actionnement quand l'opérateur libère ledit moyen d'entrée opérationnel.

9. Méthode d'indication utilisant un indicateur de six degrés de l'information de liberté (1) en combinaison avec un détecteur de position (20) utilisant l'induction électromagnétique, laquelle méthode permet à un opérateur introduire six degrés de l'information de liberté dans un ordinateur (30) en actionnant l'indicateur (1) pendant que l'opérateur tient l'indicateur dans une seule main, comprenant:

- une étape de détection d'entrée opérationnelle pour détecter que l'opérateur actionne une pluralité de moyens d'entrée opérationnels (11, 12, 13) pourvus sur la portion sur une enceinte (10) dudit indicateur de six degrés de l'information de liberté (1) touché par les doigts de l'opérateur et opérable indépendamment par les doigts de l'opérateur;

- une étape d'entrée de quatre degrés de l'information de liberté pour introduire dans un ordinateur (30) l'information traitée dans ladite étape de transmission de signaux, sauf l'information pour X et Y, comme quatre degrés de l'information de liberté; et

- une étape d'entrée d'information X/Y pour introduire, par l'intermédiaire du moyen d'entrée de surface inférieure (14) pourvu sur la surface inférieure (16) dudit indicateur de six degrés de l'information de liberté (1), deux degrés de l'information de liberté comme un résultat pour détecter que l'opérateur meut ledit indicateur de six degrés de l'information de liberté, dans l'ordinateur, **caractérisé en ce qu'**elle comprend une étape de transmission de signaux pour transmettre audit détecteur de position (20) un ou plusieurs signaux correspondant à l'opération détectée dans ladite étape de détection d'entrée opérationnelle par utilisation d'induction électromagnétique; et que

- l'étape d'entrée de quatre degrés de l'information de liberté comprend une étape d'entrée pour détecter la rotation d'une bobine de détection de l'angle de rotation (42) relative à une bobine de détection de coordonnées (41) autour le centre de la bobine de détection de coordonnées (41) comme un résultat de l'actionnement par l'opérateur causant la rotation de l'élément de rotation (44) de l'un de la pluralité de moyens d'entrée opérationnels (13) relative à la bobine de détection de coordonnées (41) des moyens d'entrée de surface inférieure (14) pourvus sur la surface inférieure (16) dudit indicateur de six degrés de l'information de liberté (1), et pour introduire les coordonnées détectés comme un degré de l'information de liberté dans l'ordinateur.

EP 1 283 495 B1

Fig. 1

19

Fig. 2

Fig. 3

Fig. 4

# Fig. 5

RECEIVING 81 MEANS

COUNTING MEANS 84-1

CONVERTING MEANS 83-1

① 26

continuous value ②

FROM STICK CONTROLLER 22

84-2  83-2

continuous amount ③

COUNTING MEANS 84-4  83-4

④

CONTINUOUS AMOUNT

CONVERTING MEANS

⑤

SWITCH CODE
(FROM SLIDING SWITCH 31)

82

85

RETURNING MEANS

CONTROL MEANS

# Fig. 6

23

92

91

## Fig. 7

## Fig. 8

Fig. 9

START — (1)

SCAN ENTIRE SURFACE IN X-AXIS DIRECTION — S10

TABLET UPPER? — S11

NO

YES

COIL NO. OF LARGEST SIGNAL, $\eta_x$ — S12

SCAN ENTIRE SURFACE IN Y-AXIS DIRECTION — S13

COIL NO. OF LARGEST SIGNAL, $\eta_Y$ — S14

CHARGE — S15

PARTIAL SCANNING FOR CENTER COORDINATES — S16

HIGHER THAN A CERTAIN LEVEL? — S17

NO

YES

PARTIAL SCANNING FOR ROTATION COORDINATES — S18

COIL NOS. OF LARGEST SIGNAL $(\eta_x, \eta_Y)$ — S19

COORDINATES AND ROTATION ANGLE — S20

Fig. 10

Fig. 11

Fig. 12

Fig. 13

**EP 1 283 495 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 63070326 A
- JP 8030374 A
- WO 9206457 A
- EP 0694865 A